# DEMANDE DE BREVET EUROPEEN

(11) **EP 4 332 689 A1**
(43) Date de publication de la demande: **06.03.2024**
(21) Numéro de dépôt: 22193760.0
(22) Date de dépôt: 02.09.2022
(51) Int. Cl.: G04B 19/18, G04B 45/00

(54) **PROCEDE DE REALISATION D'UN ELEMENT D'HORLOGERIE OU DE BIJOUTERIE INCRUSTE D'UN DECOR CERAMIQUE**

(71) Demandeur: Comadur S.A., 2400 Le Locle (CH)
(72) Inventeur: VUILLE, Pierry, 2338 Les Emibois (CH); OIAN, Nicolas, 1971 Grimisuat (CH)
(74) Mandataire: ICB SA

(57) **Abrégé**

Un aspect de l'invention concerne un procédé de fabrication d'un élément d'habillage (10) d'horlogerie ou de bijouterie ou de joaillerie, comportant un corps (1) en matériau dur, incrusté d'un décor (5) dans un deuxième matériau, où dans une première étape (100) on forme le corps dans le matériau dur, au cours de cette première étape (100) ou dans une deuxième étape (200) on réalise un évidement (9) dans une face du corps (1), dans une troisième étape (300) on modifie l'état de surface du fond et/ou des parois dudit évidement (9) pour augmenter sa surface de contact, dans une quatrième étape (400) on remplit cet évidement du deuxième matériau qui est un matériau composite comportant au moins un polymère chargé biosourcé choisi pour sa résistance à l'usure, pour constituer un insert (2) formant un dit décor (5), dans une cinquième étape (500) on effectue une finition de surface dudit insert (2).

## Description

### Domaine technique de l'invention

L'invention concerne un procédé de fabrication d'un élément d'horlogerie ou de bijouterie ou de joaillerie, en matériau dur, incrusté d'au moins un décor dans un deuxième matériau.

L'invention concerne encore un élément d'habillage d'horlogerie ou de bijouterie ou de joaillerie, en matériau dur, incrusté d'au moins un décor dans un deuxième matériau.

L'invention concerne encore une pièce d'horlogerie ou de bijouterie ou de joaillerie comportant au moins un tel élément d'habillage.

L'invention concerne le domaine de la fabrication des éléments d'habillage pour pièces d'horlogerie, de bijouterie, de joaillerie, qui doivent combiner une haute tenue mécanique, une résistance à l'usure, une inaltérabilité, et un effet esthétique particulier.

### Arrière-plan technologique

La réalisation de composants d'habillage sur la base d'un matériau dur, notamment et non limitativement une céramique, comportant un décor contrastant avec l'aspect de ce matériau dur, est difficile, car ce décor doit présenter des qualités de tenue mécanique, de résistance à l'usure, et d'inaltérabilité, qui soient voisines de celles du matériau dur de base. De plus l'accrochage entre le matériau dur et ce décor rapporté doit être parfait, et esthétique (tel que peut l'être un sertissage en joaillerie), ou invisible de l'utilisateur.

On connaît le surmoulage de caoutchouc, le remplissage de cavités par une laque, le remplissage par d'autres matériaux tels que Hyceram ^{®} ou Liquidmetal ^{®}, ou autre, notamment par bi-injection.

Le problème du choix des matériaux et de la définition du mode opératoires est d'assurer un bon comportement mécanique de l'élément d'habillage, et en particulier un excellent accrochage du décor dans un corps en matériau dur, une bonne résistance aux rayures, et une bonne tenue dans le temps.

### Résumé de l'invention

L'invention se propose de mettre au point un procédé de réalisation d'un élément d'horlogerie ou de bijouterie ou de joaillerie, en matériau dur, incrusté d'au moins un décor, notamment dans un deuxième matériau différent de ce matériau dur, pour combiner en final une haute tenue mécanique, une résistance à l'usure, une inaltérabilité, et un effet esthétique particulier.

A cet effet, l'invention concerne un procédé de réalisation d'un élément d'horlogerie ou de bijouterie ou de joaillerie, en matériau dur, incrusté d'au moins un décor dans un deuxième matériau différent de ce matériau dur, selon la revendication 1.

L'invention concerne encore un élément d'habillage d'horlogerie ou de bijouterie ou de joaillerie, en matériau dur, incrusté d'au moins un décor dans un deuxième matériau.

L'invention concerne encore une pièce d'horlogerie ou de bijouterie ou de joaillerie comportant au moins un tel élément d'habillage.

### Brève description des figures

Les buts, avantages et caractéristiques de l'invention seront mieux compris à la lecture de la description détaillée qui va suivre, en référence aux figures annexées, où :

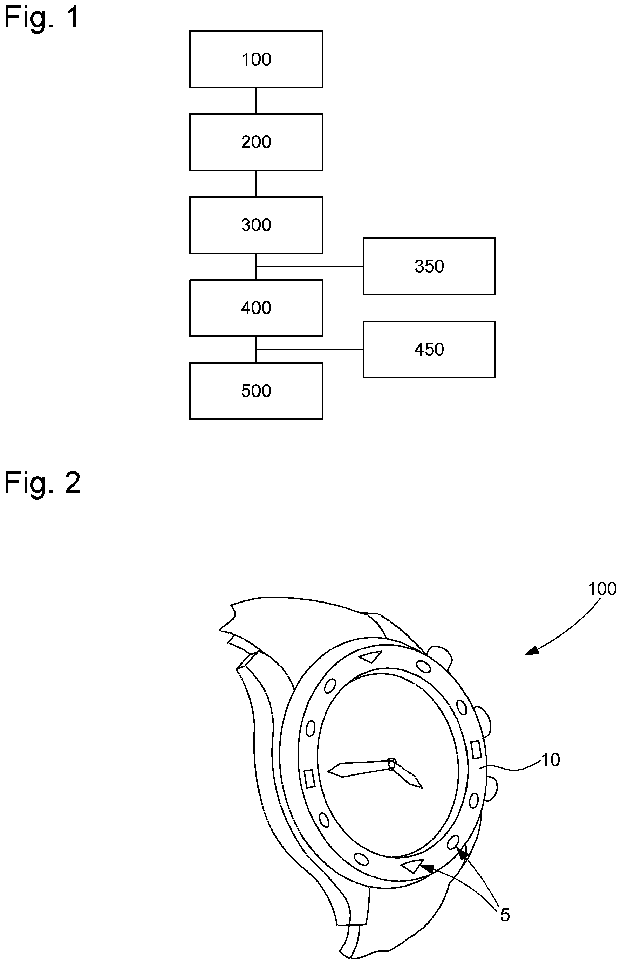

- la figure 1 est un logigramme montrant la succession des étapes de mise en oeuvre du procédé selon l'invention ;
- la figure 2 illustre, de façon schématisée, une pièce d'horlogerie, notamment une montre, comportant un élément d'habillage avec un décor, réalisé selon ce procédé ;
- la figure 3 représente, de façon schématisée, partielle, et en coupe, un élément d'habillage en matériau dur, qui comporte un évidement pour la réception d'un deuxième matériau destiné à former un décor ;
- la figure 4 représente, de façon similaire à la figure 3, le même élément, dans lequel des profils en contre-dépouille ont été pratiqués sur les parois, et des cavités bordées également par des surfaces en contre-dépouille ont été pratiquées sur le fond de l'évidement ; les traits mixtes montrent les trajectoires de faisceaux laser, passant par l'orifice de l'évidement, et capables d'usiner ces profils et surfaces d'accrochage en contre-dépouille ;
- la figure 5 représente, de façon similaire à la figure 4, le même élément, dans lequel un deuxième matériau, qui est un matériau composite comportant en tout ou partie au moins un polymère chargé biosourcé, a été inséré dans l'évidement ;
- la figure 6 représente, de façon similaire à la figure 5, le même élément, dans lequel la partie protubérante du deuxième matériau, a été arasée au niveau de la surface supérieure du corps en matériau dur ;
- la figure 7 représente, de façon similaire à la figure 6, un autre élément, dans lequel deux évidements ont été réalisés de part et d'autre d'une paroi fine, dont les parois et les fonds ont été travaillés de façon similaire à la figure 4, ces évidements ont aussi été remplis du deuxième matériau, et la partie protubérante du deuxième matériau, dans un premier évidement a été arasée au niveau de la surface supérieure du corps en matériau dur, et dans le deuxième évidement a été usinée en creux par rapport à cette surface supérieure .

### Description détaillée de l'invention

L'invention concerne un procédé de fabrication d'un élément 10, notamment un élément d'habillage, d'horlogerie ou de bijouterie ou de joaillerie, comportant un corps en matériau dur, incrusté d'au moins un décor 5 dans un deuxième matériau, notamment différent de ce matériau dur.

Depuis l'introduction du matériau céramique pour la fabrication de pièces d'habillage d'horlogerie ou de bijouterie ou de joaillerie, on s'efforce d'intégrer à ces composants des décors comportant des chiffres, index, échelles ou des valeurs d'affichage, ou encore des décors esthétiques.

Le document EP2855400 au nom de The Swatch Group Research and Development Ltd décrit ainsi un élément céramique incrusté d'au moins un décor en céramique composite. Ce décor en céramique composite est réalisé avec une matrice organique chargée avec des particules de céramique, réticulée et densifiée sous atmosphère contrôlée après son insertion dans un évidement de l'élément céramique. Les enseignements de ce document sont aussi applicables à certaines variantes de la présente invention, par exemple pour la fabrication de décors multicolores, ou encore comportant un matériau phosphorescent tel que du Superluminova ^{®}, ou encore comportant un aluminate de strontium phosphorescent, ou similaire.

Le document EP4001356 au nom de ETA SA Manufacture Horlogère Suisse décrit un article réalisé dans un matériau plastique chargé, ce matériau comprenant une charge dans une matière métallique et/ou céramique, au moins un polymère, et optionnellement un agent de couplage, un renfort, un pigment, un diluant et/ou un plastifiant, dans des fourchettes bien précises. Là aussi, les enseignements de ce document sont aussi applicables à certaines variantes de la présente invention, par exemple pour la composition d'un deuxième matériau que nous allons exposer ci-après.

Selon l'invention, dans une première étape 100 on forme un corps 1 dans un tel matériau dur.

Au cours de cette première étape 100, ou dans une deuxième étape 200 consécutive à cette première étape 100, on réalise au moins un évidement 9 dans une face du corps 1 en matériau dur. Cet au moins un évidement 9 est agencé pour former l'empreinte d'un tel décor.

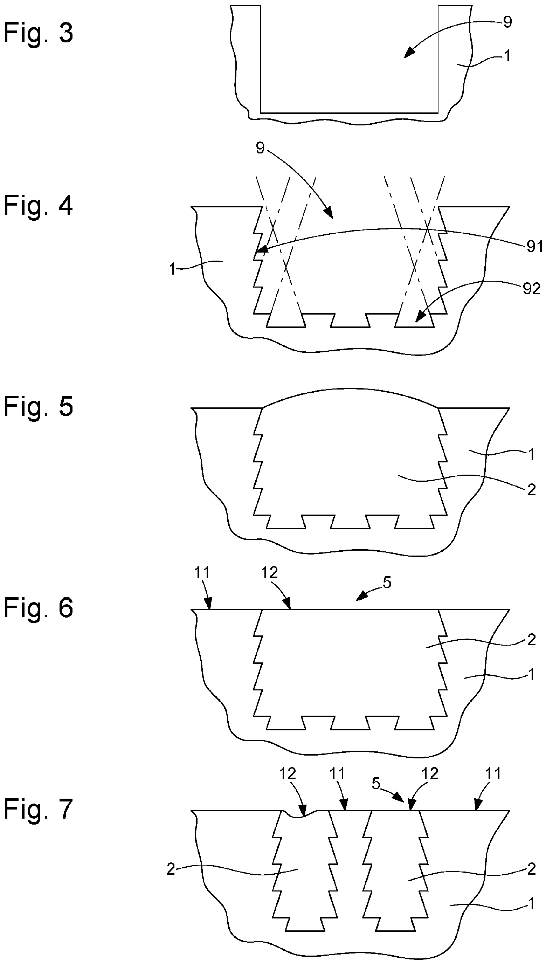

Dans une troisième étape 300,on modifie l'état de surface du fond et/ou des parois de cet évidement 9 pour augmenter sa surface de contact. La figure 4 montre un exemple de réalisation, dans lequel des profils en contre-dépouille 91 ont été pratiqués sur les parois, et des cavités 92 bordées également par des surfaces en contre-dépouille ont été pratiquées sur le fond de l'évidement 9; les traits mixtes montrent les trajectoires de faisceaux laser, passant par l'orifice de l'évidement 9, et capables d'usiner ces profils et surfaces d'accrochage en contre-dépouille

Dans une quatrième étape 400, on remplit au moins un évidement 9 de ce deuxième matériau, qui est un matériau composite comportant en tout ou partie au moins un polymère chargé biosourcé, qui est choisi pour sa résistance à l'usure, pour constituer un insert 2 formant un tel décor 5.

En particulier ce polymère chargé biosourcé peut être ou comporter une bio céramique, comme la Biocéramique ^{®} de Swatch ^{®}, qui comporte une céramique avec des matériaux biosourcés réalisés à partir d'huile de ricin.

Dans une cinquième étape 500, on effectue une finition de surface de cet insert 2, en usinant sa surface 12, notamment en retrait ou en arasement avec la surface 11 du corps 1 autour de l'évidement 9.

Plus particulièrement, au cours de la deuxième étape 200 et/ou de la troisième étape 300, on crée des micro-dépouilles 91, 92, au niveau des parois et/ou du fond.

Plus particulièrement, au cours de la deuxième étape 200 et/ou de la troisième étape 300 on crée des micro-dépouilles 91, 92, qui sont en contre-dépouille au niveau des parois et/ou du fond. Notamment un tir laser incliné permet, même si l'évidement comporte une ouverture de petite taille, de réaliser de tels profils en creux dans les parois ou le fond, facilitant l'accrochage du deuxième matériau sur le premier matériau.

Plus particulièrement, au cours de la deuxième étape 200 et/ou de la troisième étape 300, on réalise les parois et/ou le fond de l'évidement avec une rugosité comprise entre 7 et 13 micromètres Ra, plus particulièrement entre 8 et 10 micromètres Ra.

Plus particulièrement, au cours de la cinquième étape 500, on arase l'insert 2, ou on l'usine en retrait du corps 1, pour limiter son volume à celui de l'évidement 9 dans lequel il a été formé, afin de ne laisser du deuxième matériau que dans le creux de cet évidement 9. Ainsi l'insert 2 réalisé dans le deuxième matériau n'est pas saillant par rapport à la surface du corps, là où un évidement a été réalisé.

Plus particulièrement, on choisit ledit matériau dur du corps parmi un oxyde, ou un carbure ou un nitrure, respectivement de titane, ou de zirconium, ou de silicium, ou d'aluminium.

Plus particulièrement, on choisit ledit matériau dur dudit corps parmi un cermet, un saphir, une spinelle, ou selon une composition prise parmi MgAlO4, Mn3O4, ZnFeO4, FeCrO4, LiMnO4,MgSe0.1-0.4Al0.9-0.6O4, YAG, ou encore parmi les pierres précieuses, semi-précieuses, ou les pierres dures, les météorites, la nacre, les fossiles, et similaires.

Plus particulièrement, on choisit comme matériau dur un cermet comportant un oxyde, ou un carbure ou un nitrure, respectivement de titane, ou de zirconium, ou de silicium, ou d'aluminium.

Dans une variante, on choisit comme deuxième matériau composite une céramique composite.

Plus particulièrement, on choisit ce deuxième matériau composite comportant des particules de céramique.

Plus particulièrement, on choisit le deuxième matériau composite comportant des particules de céramique qui sont formées à partir d'un oxyde ou d'un carbure ou d'un nitrure, respectivement de titane, ou de zirconium, ou de silicium, ou d'aluminium.

Plus particulièrement, on choisit le deuxième matériau comportant entre 50% et 85% en masse de céramique.

Dans une variante, on choisit ce deuxième matériau composite comportant des particules d'un troisième matériau qui est un matériau dur.

Plus particulièrement, on choisit le deuxième matériau comportant entre 50% et 85% en masse de métal.

Notamment, la charge métallique peut comporter du titane, du tungstène, du platine, de l'or, de l'iridium.

Plus particulièrement, on choisit comme deuxième matériau un matériau comportant, en masse et pour un total de 100%, une charge dans une matière biosourcée et/ou métallique et/ou céramique selon un pourcentage compris entre 50% et 85% bornes incluses, au moins un polymère selon un pourcentage compris entre 15% et 50% bornes incluses, un agent de couplage selon un pourcentage compris entre 0% et 10% bornes incluses, un renfort selon un pourcentage compris entre 0% et 10% bornes incluses, un pigment selon un pourcentage compris entre 0% et 5% bornes incluses, un diluant et/ou un plastifiant selon un pourcentage compris entre 0% et 5% bornes incluses, ce polymère étant lié à cette charge et/ou, lorsque le deuxième matériau comporte au moins un agent de couplage, cet agent de couplage étant respectivement lié au polymère et à la charge par une ou plusieurs des liaisons choisies parmi une liaison hydrogène, une liaison de coordination et une liaison ionique.

Plus particulièrement, ce polymère comporte un donneur de liaison hydrogène, l'agent de couplage éventuel comporte un donneur de liaison hydrogène.

Plus particulièrement, ce polymère est un polyamide, et l'agent de couplage éventuel est un polyuréthane.

Plus particulièrement, ce polymère est un polyuréthane.

Plus particulièrement, ce polymère est un polyester, et l'agent de couplage éventuel est un hydroxysilane avec une fonction amide ou amine.

Plus particulièrement, le deuxième matériau comporte un renfort formé de fibres de verre, et/ou de billes de verre, et/ou de fibres de carbone, et/ou de fibres d'aramide, et/ou de fibres végétales ou/et animales.

Plus particulièrement, lors de la quatrième étape 400, on remplit l'évidement avec une matrice organique chargée au moins partiellement de particules organiques.

Plus particulièrement encore, entre la quatrième étape 400 et la cinquième étape 500, on exécute une étape intermédiaire 450, lors de laquelle on réticule et densifie cette matrice organique sous atmosphère contrôlée, à une température comprise entre 20°C et 300°C.

Plus particulièrement, on effectue cette étape intermédiaire 450 sous une pression comprise entre 300 et 650 bars, plus particulièrement entre 400 et 600 bars.

Plus particulièrement, on forme cette matrice organique à partir d'un époxyde modifié ou non, et/ou d'un acrylique modifié ou non, et/ou d'un polyuréthane, et/ou d'une silicone. Plus particulièrement, cette matrice polymère organique est chargée en céramique; plus particulièrement encore, la charge en céramique est, en masse, comprise entre 55% et 65%, bornes comprises, de la masse du deuxième matériau, notamment voisine de 60%, plus particulièrement comprise entre 58% et 62%, bornes comprises.

Plus particulièrement, on réalise la première étape 100 parfrittage.

Plus particulièrement, on réalise la deuxième étape 200 et/ou la troisième étape 300 par balayage laser. La réalisation par gravure mécanique est possible, mais le coût des outils diamantés nécessaires est élevé.

Plus particulièrement, lors de la deuxième étape 200, on réalise l'évidement avec une profondeur comprise entre 80 micromètres et 500 micromètres par rapport à la surface supérieure du corps en matériau dur.

Plus particulièrement, lors de la deuxième étape 200 ou/et troisième étape 300, on réalise dans le fond et/ou les parois de l'évidement des cavités ou des rainures, dont la profondeur est inférieure au cinquième de celle de cet évidement.

Plus particulièrement, on réalise au moins une partie de la troisième étape 300 par sablage.

Plus particulièrement, entre la troisième étape 300 et la quatrième étape 400, lors d'une autre étape intermédiaire 350, on forme une couche de liaison au niveau du fond et/ou des parois de l'évidement pour assurer un meilleur accrochage du deuxième matériau.

Plus particulièrement, on choisit pour cette couche de liaison une laque, ou une couche comportant au moins un métal et/ou un alliage métallique.

Plus particulièrement, on choisit pour cette couche de liaison une couche comportant au moins un nitrure métallique, ou/et un carbure métallique, ou/et un silane, ou/et un organosiloxane, ou/et un alcanéthiol, ou/et un alcane disulfide, ou/et un zirconate, ou/et un titanate, ou/et un aluminate.

Dans une variante de réalisation, on réalise au moins une partie de la quatrième étape 400 par surmoulage ou injection.

Selon le choix des premier matériau et deuxième matériau, au moins une étape de frittage, de cuisson, ou de passage dans une atmosphère particulière, peut être intégrée dans le processus.

Plus particulièrement, on choisit le premier matériau et/ou le deuxième matériau comportant plus de 75% en masse d'or et/ou de platine. Dans certaines conditions de répartition des masses, on peut ainsi obtenir un composant titrable.

Dans une variante de réalisation, on réalise la première étape 100 et/ou la quatrième étape 400 par impression 3D sur la base d'un fichier tridimensionnel.

Pour réaliser ainsi un objet, ici le corps 1 ou/et l'insert 2, on génère au préalable un ensemble de données tridimensionnelles définissant un modèle, lequel comporte au moins un évidement 9, et au moins un orifice d'évacuation nécessaire à la mise en oeuvre du process. Cet ensemble de données tridimensionnelles est converti en une pluralité de couches, chaque couche représentant une couche transversale de l'objet, lequel objet est formé couche par couche à partir d'un matériau en poudre en utilisant un procédé de fabrication additif tel que « DMLS », frittage laser de métal (pour Direct Metal Laser Sintering), ou similaire afin de réaliser cet objet de façon unitaire. La poudre libre est enlevée de chaque cavité, notamment de chaque évidement, par au moins un tel orifice d'évacuation de poudre, formé entre la cavité et une surface externe de l'objet. Si nécessaire, au moins un orifice traversant formé à travers l'objet est usiné pour la réception d'un organe de commande ou similaire, cet orifice traversant pouvant être pré-formé lors de la construction tridimensionnelle de l'objet.

Plus particulièrement, on réunit en une seule opération unique d'impression 3D, sur la base d'un fichier tridimensionnel, la première étape 100, la deuxième étape 200, et la troisième étape 300, pour la confection du corps 1 dans le premier matériau. Plus particulièrement encore, on réalise au moins un insert 2 lors de la quatrième étape 400 réalisée en impression 3D avec le deuxième matériau, sur la base constituée par le corps 1.

Dans une autre variante de réalisation par impression 3D, on réunit en une seule opération unique d'impression 3D, sur la base d'un fichier tridimensionnel, la première étape 100, la deuxième étape 200, la troisième étape 300 et la quatrième étape 400. L'ensemble de données tridimensionnelles définit l'amenée des poudres correspondant au premier matériau et au deuxième matériau, et le programme machine définit les séquences temporelles de frittage laser respectivement du premier matériau et du deuxième matériau, au niveau de chaque emplacement concerné.

Le processus d'incrustation composite utilise des polymères à base pétrole, dont les propriétés mécaniques sont supérieures à celles des autres polymères, mais sont aux limites en ce qui concerne la résistance aux rayures. Le comportement mécanique d'un deuxième matériau en matière plastique chargée est supérieur, et préférable pour une application horlogère, meilleur encore qu'un deuxième matériau en base epoxy avec une charge en céramique de 60%.

En somme, l'invention permet la réalisation d'un élément en matériau dur, incrusté d'au moins un décor céramique composite avec une composition comportant une matrice biosourcée.

Le procédé d'incrustation par surmoulage convient mieux pour des polymères à base comportant un donneur de liaison hydrogène tel que époxyde, acrylique, polyuréthane ou silicone. Un tel composite est développé pour les technologies d'injection, ce qui facilite l'intégration dans un cycle de fabrication.

Le choix d'un polymère issu d'une base biologique rend le procédé plus économique et plus écologique que les procédés antérieurement connus. Ce procédé est apte à l'automatisation, ce qui le distingue des anciennes inclusions de laque ou similaires, et il est ainsi possible d'assurer une très bonne répétabilité, en même temps qu'une vitesse de mise en œuvre.

La tenue dans le temps est bonne, et il est possible de réaliser un composant d'une dureté acceptable, avec une bonne résistance à l'usure.

L'invention concerne encore un élément d'habillage 10 d'horlogerie ou de bijouterie ou de joaillerie, comportant un corps 1 en matériau dur, incrusté d'au moins un décor 5 dans un deuxième matériau différent du matériau dur, notamment réalisé par ce procédé. Plus particulièrement, au moins un tel décor 5 est constitué par la surface d'un insert 2 en polymère chargé biosourcé choisi pour sa résistance à l'usure.

L'invention concerne encore une pièce 100 d'horlogerie ou de bijouterie ou de joaillerie comportant au moins un tel élément d'habillage 10.

L'invention se prête bien à la réalisation de décors complexes, ou de décors très fins, comme des chiffres, des index, ou d'autres symboles, ainsi qu'à la réalisation de décors cloisonnés à parois fines. Le procédé permet aussi de réaliser des pièces tridimensionnelles de hauteur conséquente par rapport aux dimensions de leur base.

## Revendications

1. Procédé de fabrication d'un élément (10) d'horlogerie ou de bijouterie ou de joaillerie, en matériau dur, incrusté d'au moins un décor (5) dans un deuxième matériau différent dudit matériau dur, **caractérisé en ce que** dans une première étape (100) on forme un corps (1) dans un dit matériau dur, **en ce que**, au cours de ladite première étape (100) ou dans une deuxième étape (200) consécutive on réalise au moins un évidement (9) dans une face dudit corps (1) en matériau dur, ledit évidement (9) étant agencé pour former l'empreinte d'un dit décor (5), dans une troisième étape (300) on modifie l'état de surface du fond et/ou des parois dudit évidement (9) pour augmenter sa surface de contact, dans une quatrième étape (400) on remplit au moins un dit évidement (9) dudit deuxième matériau qui est un matériau composite comportant en tout ou partie au moins un polymère chargé biosourcé choisi pour sa résistance à l'usure, pour constituer un insert (2) formant un dit décor (5), dans une cinquième étape (500) on effectue une finition de surface dudit insert.

2. Procédé selon la revendication 1, **caractérisé en ce que**, au cours de ladite deuxième étape (200) et/ou de ladite troisième (300) étape on crée de micro-dépouilles (91) au niveau desdites parois.

3. Procédé selon la revendication 1 ou 2, **caractérisé en ce que**, au cours de ladite cinquième étape (500) on arase ledit insert (2) pour limiter son volume à celui dudit évidement (9) dans lequel il a été formé, afin de ne laisser du dit deuxième matériau que dans le creux dudit évidement (9).

4. Procédé selon l'une des revendications 1 à 3, **caractérisé en ce qu'**on choisit ledit matériau dur dudit corps parmi un oxyde, ou un carbure ou un nitrure, respectivement de titane, ou de zirconium, ou de silicium, ou d'aluminium.

5. Procédé selon l'une des revendications 1 à 3, **caractérisé en ce qu'**on choisit ledit matériau dur dudit corps parmi un cermet, un saphir, une spinelle, ou selon une composition prise parmi MgAlO₄, Mn₃O₄, ZnFeO₄, FeCrO₄, LiMnO₄,MgSe_{0.1-0.4}Al_{0.9-0.6}O₄, YAG.

6. Procédé selon la revendication 5, **caractérisé en ce qu'**on choisit comme dit matériau dur un cermet comportant un oxyde, ou un carbure ou un nitrure, respectivement de titane, ou de zirconium, ou de silicium, ou d'aluminium.

7. Procédé selon l'une des revendications 1 à 6, **caractérisé en ce qu'**on choisit comme deuxième matériau composite une céramique composite.

8. Procédé selon la revendication 7, **caractérisé en ce qu'**on choisit ladite céramique composite comportant des particules de céramique qui sont formées à partir d'un oxyde ou d'un carbure ou d'un nitrure, respectivement de titane, ou de zirconium, ou de silicium, ou d'aluminium.

9. Procédé selon la revendication 7 ou 8, **caractérisé en ce qu'**on choisit ledit deuxième matériau comportant entre 50% et 85% en masse de céramique.

10. Procédé selon l'une des revendications 1 à 6, **caractérisé en ce qu'**on choisit ledit deuxième matériau composite comportant des particules d'un troisième matériau qui est un matériau dur.

11. Procédé selon la revendication 10, **caractérisé en ce qu'**on choisit ledit deuxième matériau comportant entre 50% et 85% en masse de métal.

12. Procédé selon l'une des revendications 1 à 6, **caractérisé en ce qu'**on choisit comme deuxième matériau un matériau comportant, en masse et pour un total de 100%, une charge dans une matière biosourcée et/ou métallique et/ou céramique selon un pourcentage compris entre 50% et 85% bornes incluses, au moins un polymère selon un pourcentage compris entre 15% et 50% bornes incluses, un agent de couplage selon un pourcentage compris entre 0% et 10% bornes incluses, un renfort selon un pourcentage compris entre 0% et 10% bornes incluses, un pigment selon un pourcentage compris entre 0% et 5% bornes incluses, un diluant et/ou un plastifiant selon un pourcentage compris entre 0% et 5% bornes incluses, ledit polymère étant lié à ladite charge et/ou, lorsque ledit deuxième matériau comporte au moins un agent de couplage, ledit agent de couplage étant respectivement lié audit polymère et à ladite charge par une ou plusieurs des liaisons choisies parmi une liaison hydrogène, une liaison de coordination et une liaison ionique.

13. Procédé selon la revendication 12, **caractérisé en ce que** ledit polymère comporte un donneur de liaison hydrogène, et **en ce que** ledit agent de couplage éventuel comporte un donneur de liaison hydrogène.

14. Procédé selon la revendication 12 ou 13, **caractérisé en ce que** ledit polymère est un polyamide et **en ce que** ledit agent de couplage éventuel est un polyuréthane.

15. Procédé selon la revendication 12 ou 13, **caractérisé en ce que** ledit polymère est un polyuréthane.

16. Procédé selon la revendication 12 ou 13, **caractérisé en ce que** ledit polymère est un polyester et **en ce que** ledit agent de couplage éventuel est un hydroxysilane avec une fonction amide ou amine.

17. Procédé selon l'une des revendications 1 à 16, **caractérisé en ce qu'**on réalise ladite quatrième étape (400) par injection dudit deuxième matériau dans au moins un dit évidement (9).

18. Procédé selon l'une des revendications 1 à 16, **caractérisé en ce qu'**on réalise ladite première étape (100) et/ou ladite quatrième étape (400) par impression 3D sur la base d'un fichier tridimensionnel.

19. Procédé selon l'une des revendications 1 à 16, **caractérisé en ce qu'**on réunit en une seule opération unique d'impression 3D, sur la base d'un fichier tridimensionnel, ladite première étape (100), ladite deuxième étape (200), et ladite quatrième étape (400).

20. Elément d'habillage (10) d'horlogerie ou de bijouterie ou de joaillerie, comportant un corps (1) en matériau dur, incrusté d'au moins un décor (5) dans un deuxième matériau différent dudit matériau dur, **caractérisé en ce qu'**au moins un dit décor (5) est constitué par la surface d'un insert (2) en polymère chargé biosourcé choisi pour sa résistance à l'usure.

21. Pièce (100) d'horlogerie ou de bijouterie ou de joaillerie comportant au moins un élément d'habillage (10) selon la revendication 20.
